# EUROPÄISCHE PATENTANMELDUNG

(11) **EP 0 676 351 A2**
(43) Veröffentlichungstag der Anmeldung: **11.10.1995**
(21) Anmeldenummer: 95104124.3
(22) Anmeldetag: 21.03.1995
(51) Int. Cl.: B65H 23/32

(54) **Fördervorrichtung für Flachbahnen aus Kunststoffolie**

(30) Priorität: 08.04.1994 DE 9405848 U
(71) Anmelder: Reinhold, Klaus, D-49525 Lengerich (DE)
(72) Erfinder: Reinhold, Klaus, D-49525 Lengerich i.w. (DE); Ratz, Gerd, D-49536 Lienen (DE); Labaig, Jean-Jacques, FR-27300 Bernay (FR)
(74) Vertreter: Busse & Busse Patentanwälte

(57) **Zusammenfassung**

Eine Fördervorrichtung für Flachbahnen (1) aus Kunststoffolie umfaßt ein Umlenksystem, das zumindest eine erste Umlenkwalze (23) und zumindest eine erste Wendestange (27) zum Umlenken der Flachbahn (1) um jeweils 180° unter gleichzeitiger Richtungsänderung aufweist. In das Umlenksystem ist ferner eine Abstützungseinrichtung für die Flachbahn (1) einbezogen, die ein endloses, mit der Fördergeschwindigkeit der Flachbahn (1) umlaufendes Transportband (46) umfaßt. Das Transportband (46) umschlingt gemeinsam mit der Flachbahn (1) die erste Wendestange (27) in der Weise, daß die von der Wendestange (27) abgewandte Seite des Transportbandes (46) während des Umschlingungseingriffs die Flachbahn (1) trägt.

## Beschreibung

Die Erfindung betrifft eine Fördervorrichtung für Flachbahnen aus Kunststoffolie nach dem Oberbegriff des Anspruchs 1.

Die bekannten derartigen Fördervorrichtungen für Kunststoffolien mit einem Umlenksystem arbeiten nur dann zufriedenstellend, wenn bestimmte Eigenschaften der z.B. als Schlauchbahn extrudierten Kunststoffolien vorliegen. Hierzu zählen insbesondere eine glatte Oberfläche und eine die Flexibilität der Folienbahn nicht nachteilig beeinflussende, geringe Foliendicke, damit die Folienbahn wie insbesondere eine flachgelegte Schlauchbahn ordnungsgemäß unter wechselnden horizontalen Anlauf- und Ablaufwinkeln um die, wie üblich, drehfest im Vorrichtungsgestell gehaltenen Wendestangen herumgeführt werden kann. Hieraus folgt, daß insbesondere solche Kunststoffolien, die eine äußere stumpfe oder klebrige Oberfläche aufweisen, für eine Handhabung in den bekannten Umlenksystemen ungeeignet sind. Es handelt sich hierbei zum Beispiel um gummiartige Folien oder um im Koextrusionsverfahren hergestellte Flachfolien oder Blasfolien, deren eine bzw. äußere Schicht beispielsweise aus einem Ethylenvinylacetatcopolymeren (EVA) besteht, während die andere bzw. innere Schicht aus einem nicht klebrigen bzw. glatten Kunststoff in Form eines üblichen Polyolefins wie etwa PE gebildet ist. Solche Folien werden beispielsweise, bei einer Blasfolie nach einem Auftrennen der flachgelegten Schlauchbahn, als Oberflächenschutzfolien verwendet, die mit der klebrigen Seite auf die zu schützenden Gegenstände aufgeklebt werden. Zu den für die bekannten Umlenksysteme ungeeigneten Kunststoffolien zählen aber auch solche mit einer größeren Dicke oder materialbedingten Steifigkeit, die das Umlenken der flachen Folienbahn um die Wendestangen erschwert.

In allen diesen Fällen erfährt die Folienbahn an den Wendestangen Zerrungen und Dehnungen in einem solchen Maße, daß eine beschädigungsfreie Durchführung der Folienbahn durch das Umlenksystem nicht möglich ist. Dem kann auch nicht dadurch abgeholfen werden, daß bei den als sog. Luftwendestangen ausgebildeten Wendestangen das durch die übliche Luftdüsenreihe erzeugte Luftpolster mehr und mehr verstärkt wird, da auf diese Weise die Führungsgenauigkeit und der falten- und verwerfungsfreie Verlauf der Folienbahn verlorengehen.

Die geschilderten Probleme zeigen sich besonders bei der Herstellung von Schlauchbahnen aus Kunststoffolie im Blasverfahren, bei denen Dickentoleranzen der Folienwand zum Beispiel aufgrund der üblichen Fertigungstoleranzen im Blaskopf des für die Folienherstellung verwendeten Extruders, in der im Anschluß an den Extrusionsvorgang von der Schlauchbahn mit aufgeweitetem Rundquerschnitt durchlaufenen Kalibriereinrichtung, durch die Innen- und Außenkühlung oder durch andere äußere Umstände entstehen. Beim Aufwickeln derartiger Schlauchbahnen im flachgelegten Zustand in einer Wickelvorrichtung würden sich durch Addition der Dickentoleranzen ohne geeignete Gegenmaßnahmen auf dem Folienwickel Ringwülste bilden, die eine bleibende Deformation der Folie in diesem Bereich zur Folge hätten und das Bedrucken und die Weiterverarbeitung der Folienschlauchbahn erschweren würden.

Als geeignete Gegenmaßnahmen zur Verhinderung der Ringwulstbildung auf dem Folienwickel sind sog. reversierende Abzugsvorrichtungen für die Schlauchbahn entwickelt worden, deren Reversiersystem beim Flachlegen der Schlauchbahn ein periodisches Wandern der Faltkanten bewirkt, die sich beim Flachlegen der Schlauchbahn bilden. Damit einher geht eine entsprechende Verteilung etwaiger Dickentoleranzen über die Breite der flachgelegten Schlauchbahn. Beim anschließenden Aufwickeln der Flachbahn in einer Aufwickelvorrichtung ist auf diese Weise die Bildung von Ringwülsten auf dem Wickel durch Addition von Dickentoleranzen der Folie vermieden. Es versteht sich, daß dabei der Schwenkwinkel der Reversierbewegung ausreichend groß gewählt werden muß.

Bei einer bekannten reversierenden Abzugsvorrichtung gemäß der DE-PS 20 35 584 wird die die üblichen um horizontale Achsen drehbaren Abquetschwalzen umfassende Flachlegevorrichtung über etwa 360° reversierend um die Achse der zugeführten Schlauchbahn in einer horizontalen Ebene geschwenkt, und es hat sich gezeigt, daß dieser Schwenkwinkel einer Reversierbewegung für die überwiegende Zahl von Anwendungsfällen einer reversierenden Abzugsvorrichtung angemessen ist. Das Reversiersystem umfaßt dabei zwei Umlenkwalzen und zwei Wendestangen zum jeweiligen Umlenken der Schlauchbahn um etwa 180° unter gleichzeitiger Richtungsänderung. Andererseits kann in solchen Anwendungsfällen, bei denen der Schwenkwinkel der Reversierbewegung der Flachlegevorrichtung mit ihren Abquetschwalzen weniger als 360° beträgt, eine einzige Wendestange zwischen zwei Umlenkwalzen oder auch in Verbindung mit nur einer Umlenkwalze für die Handhabung der Schlauchbahn im Reversiersystem der Abzugsvorrichtung ausreichen.

Bei der bekannten Abzugsvorrichtung gemäß DE-PS 20 35 584 ist die um die Achse der zugeführten Schlauchbahn schwenkbare Abstützung der Umlenkwalzen und der Wendestangen in der Vorrichtung in der Weise vorgenommen, daß die Achsen der Umlenkwalzen und der Wendestangen tangential zu Kreisen um die vertikale Drehachse der Flachlegevorrichtung verlaufen, wobei die Umlenkwalzen sich in jeder möglichen Betriebsstellung radial außerhalb der von der Schlauchbahn umschlungenen Teile der Wendestangen befinden. Die Schwenkwinkel der Umlenkwalzen und der Wendestangen nehmen mit steigender Entfernung von der Flachlegevorrichtung ab, und die Schlauchbahn wird zwischen den Umlenkwalzen und den Wendestangen sowie der ortsfesten Fördereinrichtung zum Abtransportieren der flachgelegten Schlauchbahn in zueinander parallelen, horizontalen Ebenen geführt. Hierdurch ist eine geringe Bauhöhe des Reversiersystems erreicht, wobei außerdem durch die Maßnahme, daß der Radius des von dem Schwenkweg der Achsen der Wendestangen umschriebenen Kreises die Größe π/4 x Wendestangendurchmesser beträgt, einem seitlichen Verlaufen der Schlauchbahn während des Verschwenkens des Reversiersystems entgegengewirkt wird. Dabei ergibt sich, daß der Schnittpunkt der Mittenachsen der auf die Wendestange jeweils zu- und von der Wendestange jeweils ablaufenden Schlauchbahnstränge in der zentralen Schwenkachse des Reversiersystems liegt. Während der reversierenden Schwenkbewegung ist so gewährleistet, daß sich die Schlauchbahnstränge scherenartig um die Schwenkachse öffnen und schließen, so daß theoretisch auf beide Schlauchbahnstränge symmetrisch einander entgegengesetzte gleiche Reibungskräfte einwirken und somit von der Konzeption her axiale Verschiebungen der Schlauchbahn auf den Wendestangen während des Reversierbetriebes infolge einseitig wirkender Reibungskräfte vermieden sind.

Der Erfindung liegt in erster Linie die Aufgabe zugrunde, eine Fördervorrichtung für Flachbahnen aus Kunststoffolie mit einem Umlenksystem der eingangs angegebenen Art zu schaffen, bei der das Umlenksystem auch zur Handhabung oberflächenproblematischer Kunststoffolien und/oder solcher mit eingeschränkter Flexibilität geeignet ist.

Diese Aufgabe wird nach der Erfindung durch eine Ausgestaltung der Fördervorrichtung gemäß dem Patentanspruch 1 gelöst.

Bei dieser Ausgestaltung ist in das Umlenksystem eine Abstützungseinrichtung für die Flachbahn einbezogen, die ein endloses, mit der Fördergeschwindigkeit der Flachbahn umlaufendes Transportband umfaßt. Im Betrieb der erfindungsgemäßen Vorrichtung umschlingt das Transportband gemeinsam mit der Flachbahn die erste, oder, bei mehreren Wendestangen, jede Wendestange in der Weise, daß das Transportband mit seiner von der Wendestange abgewandten Seite, also außen, die Flachbahn trägt. Dies bedeutet, daß die Flachbahn mit ihrer beispielsweise klebrigen oder stumpfen äußeren Oberfläche mit der ortsfest im Vorrichtungsgestell gehaltenen Wendestange während des Umschlingens überhaupt nicht in Eingriff kommt, der ordnungsgemäße, reibungslose Umlenkvorgang der Flachbahn um die Wendestange vielmehr allein von der Oberflächenbeschaffenheit und Flexibilität des Transportbandes abhängt. Das einmal mit der Flachbahn in Eingriff gebrachte Transportband nimmt auf diese Weise auch solche Flachbahnen zwangsweise bei seiner kontrollierten Umlaufbewegung um die jeweilige Wendestange mit, die materialbedingt eine herabgesetzte Flexibilität aufweisen.

Das Transportband selbst kann zur Erfüllung der erforderlichen Parameter, insbesondere hinsichtlich Oberflächenbeschaffenheit und Flexibilität, aus den zur Verfügung stehenden geeigneten Werkstoffen hergestellt werden. Dabei können sich übliche Förderbänder zum Beispiel aus einem zweilagigen Gewebe mit einer glatten Silikonschicht als Oberfläche empfehlen. Da das Transportband zweckmäßig eine größere Breite aufweist als die jeweils von ihm für die Umschlingung einer Wendestange aufzunehmende Flachbahn, empfiehlt es sich ferner, für das Transportband eine Breite zu wählen, die der maximalen Arbeitsbreite der Abzugsvorrichtung entspricht, so daß praktisch alle zur Verarbeitung gelangenden Flachbahnbreiten vom Transportband aufgenommen werden können.

Das erfindungsgemäße Umlenksystem funktioniert in stationären Systemen, bei denen die Flachfolienbahn ständig nur in einem gewünschten Winkel umgelenkt werden soll, ebenso wie in reversierenden Systemen, bei denen die Flachbahn mit jeweils wechselnden Winkeln in bezug auf die Wendestangenlängsachse angelaufen wird.

In weiterer, bevorzugter Ausgestaltung und Anwendung der Erfindung kann daher die Vorrichtung nach der Erfindung Teil einer Abzugsvorrichtung für von einem Extruder mit ortsfest angeordnetem Blaskopf hergestellte Schlauchbahnen aus Kunststoffolie bilden, wobei sie im Anschluß an eine Flachlegevorrichtung für die mit aufgeweitetem Rundquerschnitt zugeführte Schlauchbahn angeordnet ist, um die flachgelegte Schlauchbahn zu einer ihrerseits ortsfesten Wickelvorrichtung zu transportieren, und das Umlenksystem als zwischen der Flachlegevorrichtung und der ortsfesten Wickelvorrichtung angeordnetes Reversiersystem ausgebildet ist, das in einem Vorrichtungsgestell schwenkbar abgestützt ist. Ungeachtet des Reversierbetriebes, in den das Förderband nach der Erfindung integriert ist, erfolgt hierbei der ordnungsgemäße, reibungslose Umlenkvorgang der flachen Schlauchbahn um die mit jeweils wechselnden Winkeln in bezug auf die Wendestangenlängsachse angelaufene Wendestange oder -stangen mittels des den Umlenkvorgang um die Wendestange oder -stangen bestimmenden Transportbandes. Zugleich bleibt dabei die Kinematik des Reversiersystems gemäß der DE-PS 20 35 584 und die dadurch erreichte kontrollierte Führung der Schlauchbahn von einem ortsfesten Schlauchfolienblaskopf durch das Reversiersystem zu einer ihrerseits ortsfesten Wickelvorrichtung erhalten.

In weiterer Ausgestaltung der Erfindung, die grundsätzlich sowohl bei stationären als auch bei reversierenden Umlenksystemen Anwendung finden kann, ist das Transportband vorteilhaft in zwei Einzeltransportbänder unterteilt, die in spiegelsymmetrischer Anordnung beidseits einer die Drehachse der weiteren, der ersten Umlenkwalze nächstgelegenen Umlenkwalze enthaltenden horizontalen Ebene übereinander im Umlenksystem gehalten sind. Im Falle einer etwaigen Beschädigung des Transportbandes ist es hierbei nicht erforderlich, dieses in seiner gesamten Länge auszuwechseln, was insbesondere bei reversierenden Umlenksystemen eine erhebliche Arbeitserleichterung bedeuten kann.

Zahlreiche weitere Merkmale und Vorteile der Erfindung ergeben sich aus den Unteransprüchen und der nachstehenden Beschreibung in Verbindung mit der Zeichnung, in der ein bevorzugtes Ausführungsbeispiel des Gegenstands der Erfindung in Form einer reversierenden Abzugsvorrichtung für flachgelegte Schlauchbahnen aus Kunststoffolie schematisch veranschaulicht ist. In der Zeichnung zeigt:
- Fig. 1: eine Vorderansicht einer reversierenden Abzugsvorrichtung für Schlauchbahnen aus Kunststoffolie in 0°-Stellung der Flachlegevorrichtung,
- Fig. 2: eine Draufsicht auf die Vorrichtung nach Fig. 1, wiederum in 0°-Stellung der Flachlegevorrichtung,
- Fig. 3: eine Darstellung entsprechend Fig. 2, jedoch in -180°-Stellung der Flachlegevorrichtung,
- Fig. 4: eine Darstellung entsprechend den Figuren 2 und 3, jedoch in +180°-Stellung der Flachlegevorrichtung,
- Fig. 5: eine Darstellung entsprechend den Figuren 2, 3 und 4, jedoch in +100°-Stellung der Flachlegevorrichtung,
- Fig. 6: eine Einzelheit des Reversiersystems in einer Darstellung entsprechend Fig. 1, zur Veranschaulichung einer Abwandlung, und
- Fig. 7: eine Ansicht entsprechend Fig. 1 zur Veranschaulichung einer weiteren Abwandlung.

Eine Schlauchbahn 1 aus Kunststoffolie wird von einem Extruder mit ortsfest angeordnetem Folienblaskopf (nicht dargestellt) mit aufgeweitetem Rund- bzw. Kreisquerschnitt einer als Ganzes mit 2 bezeichneten Flachlegevorrichtung zugeführt, die in der Zeichnung nur mit zwei jeweils um eine horizontale Achse drehbaren Abquetschwalzen 3 zur Darstellung kommt. Die zwischen den Abquetschwalzen 3 flachgelegte Schlauchbahn 1 wird über eine als Ganzes mit 4 bezeichnete reversierende Abzugsvorrichtung einer Wickelvorrichtung (nicht dargestellt) zugeführt, in der die flachgelegte Schlauchbahn 1 zu einem Vorratswickel aufgewickelt wird. Die Schlauchbahn 1 wird dabei in senkrechter Richtung vom Blaskopf des Extruders über eine größere Strecke, wie sie zur Abkühlung und Verfestigung der Kunststoffolie erforderlich ist, nach oben zur Abzugsvorrichtung 4 geführt, die demgemäß üblicherweise im Deckenbereich einer entsprechenden Fabrikationshalle angeordnet ist.

Hierzu umfaßt die Abzugsvorrichtung 4 ein als Ganzes mit 5 bezeichnetes Vorrichtungsgestell, von dem in der Zeichnung lediglich ein oberer horizontaler Auflagerahmen 6 zur Abstützung eines Drehkranzpaketes 7 dargestellt ist. Das Drehkranzpaket 7 setzt sich aus senkrecht übereinander angeordneten einzelnen Drehkränzen 8, 9, 10 und 11 zusammen, die untereinander gleiche Innen- und Außendurchmesser aufweisen. Die Drehkränze 8, 9, 10 und 11 sind über zwischengelegte Wälzkörper unmittelbar aufeinander abgestützt und bilden ein auf Druck beanspruchtes Axiallager. Die Drehkränze 8 bis 11 ruhen dabei frei drehbar aufeinander und lassen sich beliebig zueinander verdrehen. Unerwünschte Querbewegungen der einzelnen Drehkränze 8 bis 11 im Drehkranzpaket 7 in horizontalen Ebenen sind hierbei praktisch ausgeschlossen.

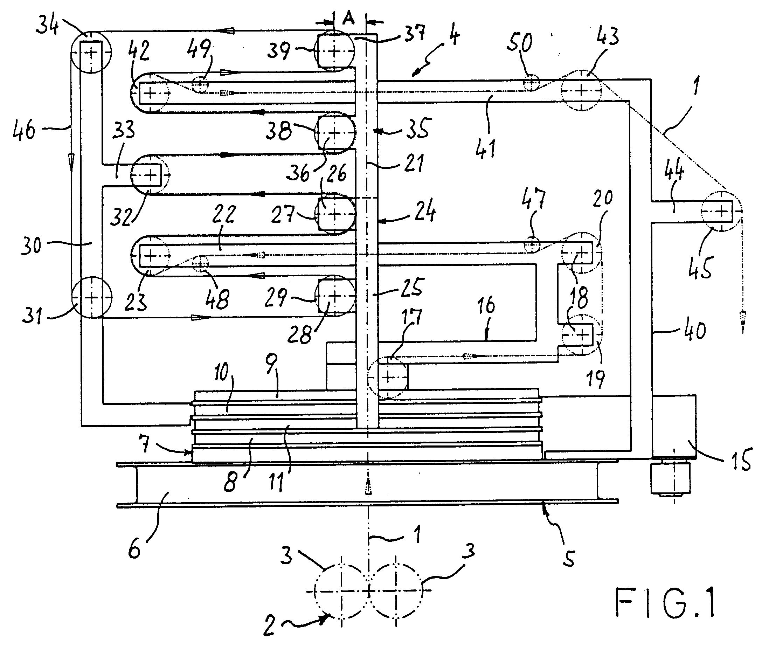

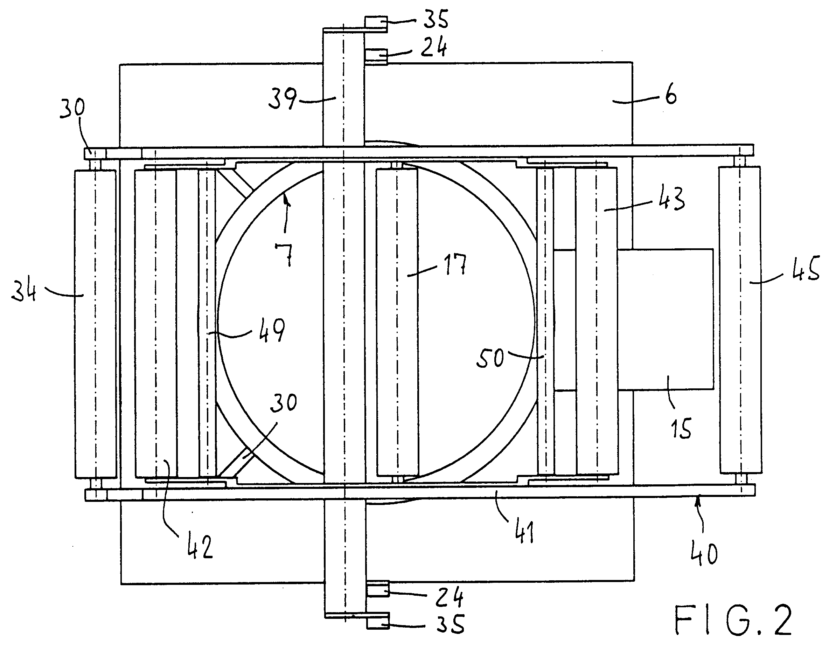

Der Antrieb der Drehkränze 8 bis 11 erfolgt mit unterschiedlichen Geschwindigkeiten über einen als Ganzes mit 15 bezeichneten Antriebsmotor, der ein entsprechendes Reversiergetriebe für die einzelnen Drehkränze 8 bis 11 umfaßt, die über eine an ihrem Außenumfang vorgesehene Mitnahmeeinrichtung, zum Beispiel eine Außenverzahnung, mit einer entsprechenden Mitnahmeeinrichtung des Reversiergetriebes in Antriebsverbindung stehen. Über das Reversiergetriebe erfährt der Drehkranz 8 eine reversierende Schwenkbewegung von 360°, d.h. +/-180° ausgehend von einer Mittelstellung oder 0°-Stellung der Flachlegevorrichtung 2 mit der Reversiervorrichtung 4, wie sie aus den Fig. 1 und 2 ersichtlich ist. Bezogen auf diese Mittelstellung erhält der Drehkranz 9 eine Reversierbewegung von +/- 135°, insgesamt 270°, der Drehkranz 10 eine Reversierbewegung von +/- 90°, insgesamt 180°, und der Drehkranz 11 eine Reversierbewegung von +/-45°, insgesamt 90°.

Am Drehkranz 8 ist ein Halter 16 befestigt, in dem im oberen Endbereich des Drehkranzpakets 7 eine Führungswalze 17 frei drehbar innerhalb der zylindrischen Hüllebene des Drehkranzpakets 7 angebracht ist. Ferner sind in zwei horizontalen Auslegern 18 des Halters 16 zwei Umlenkwalzen 19 und 20 um je eine horizontale Achse drehbar gelagert, wobei die Umlenkwalzen 19 und 20 mit ihren Drehachsen in einer gemeinsamen vertikalen Ebene angeordnet sind. Der Halter 16 besitzt ferner in Gegenüberlage zu dem oberen waagerechten Ausleger 18 einen über die vertikale mittlere Drehachse 21 der Abzugsvorrichtung 4 hinausgeführten waagerechten Ausleger 22, der an seinem freien Ende eine weitere frei drehbare Umlenkwalze 23 trägt.

Ein weiterer Halter 24 ist mit einem mittleren senkrechten Teil 25 am Drehkranz 9 befestigt. An einem oberen waagerechten Ausleger 26 ist eine erste Luftwendestange 27 und an einem mit Abstand darunter befindlichen waagerechten Ausleger 28 eine weitere Luftwendestange 29 drehfest angebracht.

Ein Halter 30 ist am Drehkranz 10 befestigt. Im Halter 30 sind eine untere Umlenkwalze 31 in der gleichen horizontalen Ebene wie die Wendestange 29, eine mittlere Umlenkwalze 32 an einem waagerechten Ausleger 33 und im oberen Endbereich des Halters 30 eine obere Umlenkwalze 34 jeweils drehbar abgestützt.

Ein weiterer Halter 35, der in der 0°-Stellung des Reversiersystems mit dem Halter 25 fluchtet, ist am Drehkranz 11 befestigt und besitzt senkrecht übereinander zwei waagerechte Ausleger 36 und 37, in denen je eine Wendestange 38 bzw. 39 drehfest gehalten ist.

Schließlich umfaßt die Abzugsvorrichtung 4 einen Halter 40, der am oberen Rahmen 6 des Vorrichtungsgestells 5 festgelegt ist und daher als ortsfestes Bauteil keine Reversierbewegung ausführt. In einem oberen, waagerechten Teil 41 sind zwei Umlenkwalzen 42 und 43 mit gleichen Abständen beidseits der vertikalen Drehachse 21 in einer gemeinsamen horizontalen Ebene zwischen den horizontalen Ebenen der Wendestangen 38 und 39 frei drehbar gelagert.

An einem nach außen gerichteten waagerechten Ausleger 44 ist ferner eine Umlenkrolle 45 frei drehbar gelagert, von der aus die Schlauchbahn 1 in nicht näher dargestellter Weise der Wickelvorrichtung zugeführt wird. Sämtliche Halter bzw. Ausleger sind zur Abstützung der von ihnen gehaltenen Umlenkglieder an deren beiden Enden doppelarmig ausgebildet.

Damit auch solche Schlauchbahnen 1 aus Kunststoffolie, die eine klebrige oder stumpfe äußere Oberfläche besitzen oder verhältnismäßig steif sind, mittels der Abzugsvorrichtung 4 im Reversierbetrieb abgezogen werden können, ist in das Reversiersystem der Abzugsvorrichtung 4 ein Transportband 46 integriert, das über je ein Paar eigener Umlenkglieder 31, 29, 34, 39 in einer horizontalen Ebene unterhalb und einer horizontalen Ebene oberhalb der von der ersten Umlenkwalze 23 und der ersten Wendestange 27 für die Schlauchbahn 1 eingenommenen horizontalen Ebenen geführt ist.

Die Paare der Umlenkglieder 31, 29 bzw. 34, 39 für das Transportband 46 bestehen dabei jeweils aus der Umlenkwalze 31 bzw. 34 und der Wendestange 29 bzw. 39. Diese Wendestangen 29, 39, die ausschließlich für die Transportbandumlenkung innerhalb des Reversiersystems vorgesehen sind, sind in 0°-Stellung des Reversiersystems in einer gemeinsamen Vertikalebene angeordnet, in der auch die Wendestangen 27 und 38 für die Schlauchbahnumlenkung mit enthalten sind. In gleicher Weise sind die Umlenkwalzen 31 und 34, die ausschließlich für die Transportbandumlenkung vorgesehen sind, in einer gemeinsamen Vertikalebene angeordnet, die jedoch in 0°-Stellung des Reversiersystems von der von den Umlenkwalzen 23, 32 und 42 für die Schlauchbahn 1 eingenommenen Vertikalebene nach außen versetzt ist. Eine der beiden Umlenkwalzen 31, 34, z.B. die Umlenkwalze 34, wird in nicht näher dargestellter Weise für einen Antrieb des Transportbandes 46 mit einer Umlaufgeschwindigkeit entsprechend der Abzugs- bzw. Fördergeschwindigkeit der Schlauchbahn 1 herangezogen.

Aufgrund der Abstützung seiner Umlenkglieder 29, 31, 34 und 39 in den Haltern 25, 30 und 35 des Reversiersystems, in denen auch die entsprechenden Umlenkglieder für die schlauchbahn 1 abgestützt sind, führt das endlose Transportband 46 wie die Schlauchbahn 1 die jeweiligen, durch die Halter 25, 30 und 35 vermittelten reversierenden Schwenkbewegungen um die Vertikalachse 21 des Systems aus. Das waagerechte untere und obere Trum des Transportbands 46 begrenzen den Raum, in dem die Umlenkwalzen 23, 32 und 42 sowie die Wendestangen 27 und 38 für die Schlauchbahnumlenkung angeordnet sind.

Nachdem die Schlauchbahn 1 die Abquetschwalzen 3 der Flachlegevorrichtung 2, die in nicht näher dargestellter Weise ebenfalls mit dem Drehkranz 8 wie der Halter 16 für eine gleiche Reversierbewegung verbunden ist, verlassen hat, läuft sie über die Führungswalze 17, die mit ihrem Außenumfang an ihrer von der Umlenkwalze 19 abgewandten Seite an die vertikale Drehachse 21 des Reversiersystems angrenzt, um sodann über die Umlenkwalze 19 und die Umlenkwalze 20 zur Umlenkwalze 23 zu laufen. Die Umlenkwalzen 19 und 20 bilden eine Wegverlängerung der Schlauchbahn 1 beim Einlauf in das Reversiersystem, die Störbereiche durch die Einbeziehung des Transportbandes 46 mit seinen Wendestangen 29 und 39 vermeidet. Die wegverlängernde Umlenkwalze 19 ist ebenso wie die weitere wegverlängernde Umlenkwalze 20 im gleichen horizontalen Abstand von der vertikalen Drehachse 21 des Reversiersystems wie die Umlenkwalzen 23, 32 und 42 angeordnet, wobei dieser Abstand aber auch größer sein kann.

Bevor jedoch die Schlauchbahn 1 die Umlenkwalze 23 umschlingt, wird sie in Abstützungsanlage mit dem Transportband 46 gebracht, das in dem der Umlenkwalze 23 vorangehenden Laufabschnitt die gleiche Laufrichtung (und -geschwindigkeit) wie die Schlauchbahn 1 hat, wie es durch Richtungspfeile der Schlauchbahn 1 und des Transportbandes 46 in Figur 1 veranschaulicht ist. Durch im waagerechten Ausleger 22 des Halters 16 drehbar gelagerte Ablenkwalzen 47 und 48 wird die Schlauchbahn 1 in eine dem Transportband 46 angenäherte parallele Laufrichtung gebracht, um nach Passieren der Ablenkwalze 48 wie das Transportband 46 die Umlenkwalze 23 zu umschlingen. Die Schlauchbahn 1 ist während der Umschlingung der Umlenkwalze 23 zwischen deren Außenumfang und dem Transportband 46 gehalten. Beim gemeinsamen Weiterlaufen des Transportbandes 46 und der Schlauchbahn 1 zur Wendestange 27 hin liegt die Schlauchbahn 1 während der Umschlingung der Wendestange 27 auf der Außenseite des Transportbandes 46, so daß die Schlauchbahn 1 keinen Kontakt mit der Umfangsfläche der Wendestange 27 erhält. Die Oberflächeneigenschaften oder das Biegeverhalten der Schlauchbahn 1 können sich somit nicht (nachteilig) auf das Umlenken um die Wendestange 27 auswirken.

Die Schlauchbahn 1 läuft sodann in Abstützungsanlage mit dem Transportband 46 weiter um die Umlenkwalze 32, sodann um die Wendestange 38 und daraufhin um die Umlenkwalze 42 in der hinsichtlich der Umlenkwalze 23 bzw. der Wendestange 27 beschriebenen Weise, um im unmittelbaren Anschluß an die Umlenkung um die Umlenkwalze 42 mit Hilfe einer im Ausleger 41 des Halters 40 drehbar gelagerten Ablenkwalze 49 außer Eingriff mit dem Transportband 46 gebracht zu werden und nach Passieren einer weiteren im Ausleger 41 drehbar gelagerten Ablenkwalze 50 über die Umlenkwalzen 43 und 45 dem angetriebenen Wickler zugeführt zu werden, während das außer Eingriff mit der Schlauchbahn 1 gebrachte Transportband 46 über die Wendestange 39 zur Umlenkwalze 34 geführt wird, um über die untere Umlenkwalze 31 und die untere Wendestange 29 wieder der ersten Umlenkwalze 23 für die gemeinsame Umschlingung von Schlauchbahn 1 und Transportband 46 zugeführt zu werden.

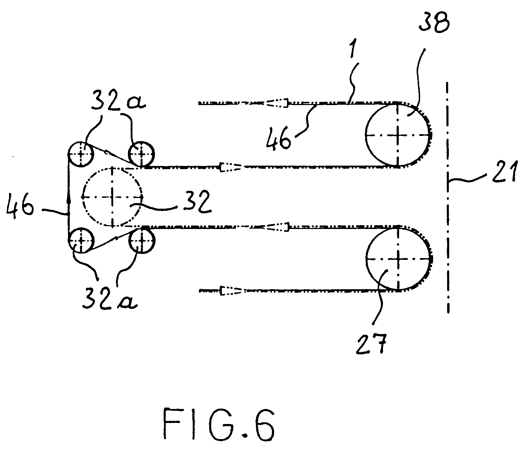

Bei empfindlichen Kunststoffolien können dadurch, daß die Schlauchbahn 1 während der Umschlingung der Umlenkwalzen 23, 32 und 42 zwischen deren Außenumfang und dem Transportband 46 gehalten ist, durch eine gewisse Quetschwirkung unerwünschte Oberflächenveränderungen, zum Beispiel Fältelungen, der Schlauchbahn 1 auftreten. Dies wird bei einer in Fig. 6 veranschaulichten Abwandlung vermieden. Die Fig. 6 zeigt einen die Wendestangen 27 und 38 und die Umlenkwalze 32 umfassenden Ausschnitt aus der Abzugsvorrichtung 4, wobei dieser Ausschnitt auf die schematische Darstellung der Umlenkglieder 27, 32, 38 mit der Schlauchbahn 1 und dem Transportband 46 beschränkt ist.

Wie Fig. 6 zeigt, sind der Umlenkwalze 32 in der durch Richtungspfeile kenntlich gemachten Förderrichtung aufeinanderfolgende Ablenkwalzen 32a zugeordnet, die dem Transportwand 46 einen Weg vorgeben, der mit Abstand um die Umlenkwalze 32 herumführt, die von der Schlauchbahn 1 allein umschlungen wird. Durch die in Laufrichtung letzte Ablenkwalze 32a wird das Transportband 46 wieder an die Schlauchbahn 1 zur Herbeiführung der Abstützungsanlage herangeführt. Das Transportband 46 und die Schlauchbahn 1 umschlingen dann gemeinsam im Gleichlauf die Wendestange 38 in der bereits beschriebenen Weise ohne Berührung der Schlauchbahn 1 mit der Wendestange 38.

Es versteht sich, daß die äußere Umlenkung des Transportbands 46 um die Umlenkwalze 32 mit Hilfe der Ablenkwalzen 32a in gleicher Form für die Umlenkwalzen 23 und 42 vorgenommen sein kann, mit der Abweichung bei der oberen Umlenkwalze 42 in der Weise, daß die in Laufrichtung des Transportbandes 46 letzte Ablenkwalze 32a fehlt, da in diesem Bereich keine erneute Zusammenführung des Transportbandes 46 und der Schlauchbahn 1 erfolgt, diese vielmehr auf den beschriebenen Wegen getrennt weitergeführt werden.

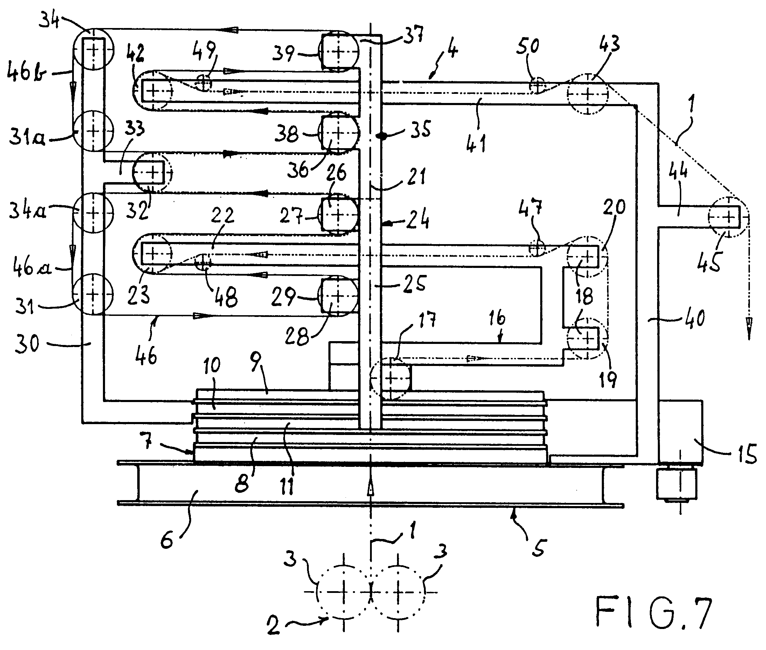

Bei der anhand der Fig. 7 veranschaulichten abgewandelten Ausführungsform ist das Transportband 46 in zwei Einzeltransportbänder 46a und 46b unterteilt, was das Auswechseln erleichtert. Theoretisch können auch mehr als zwei Einzeltransportbänder übereinander im Umlenk- bzw. Reversiersystem angeordnet sein, jedoch wird dem durch die Praxis in konstruktiver Hinsicht Grenzen gesetzt. Die beiden Einzeltransportbänder 46a und 46b sind gemäß der Darstellung in Fig. 7 in spiegelsymmetrischer Anordnung beidseits einer horizontalen Ebene, die die horizontale Drehachse der weiteren, der ersten Umlenkwalze 23 nächstgelegenen Umlenkwalze 32 enthält, übereinander im Umlenksystem abgestützt.

Der vertikale Abstand zwischen dem unteren und dem oberen Einzeltransportband 46a, 46b entspricht dem Durchmesser der weiteren Umlenkwalze 32. Für ihren eigenständigen Umlauf besitzen die Einzeltransportbänder 46a und 46b gegenüber dem einteiligen Transportband 46 jeweils eine zusätzliche eigene Umlenkwalze 34a bzw. 31a. Beide Umlenkwalzen 34a und 31a sind jeweils in einer die erste Wendestange 27 bzw. die weitere Wendestange 38 enhaltenden horizontalen Ebene im Halter 30 drehbar abgestützt, derart, daß, wie im Falle des zuvor beschriebenen Ausführungsbeispiels, die Folienbahn 1 zwischen ihren Umlenkgliedern, nämlich den Umlenkwalzen 23, 32, 42 einerseits und den Wendestangen 27, 38 andererseits, horizontal verläuft.

Jedes der Einzeltransportbänder 46a, 46b ist im übrigen gesondert über eine seiner Umlenkwalzen 31, 34a bzw. 31a, 34, antreibbar, um den Einzeltransportbändern 46a, 46b jeweils eine der Förder- bzw. Abzugsgeschwindigkeit der Flachbahn 1 entsprechende Umlaufgeschwindigkeit zu vermitteln. Vorzugsweise wird für den Antrieb des Einzeltranportbands 46a die Umlenkwalze 34a und für den Antrieb des Einzeltransportbands 46b die Umlenkwalze 34 verwendet.

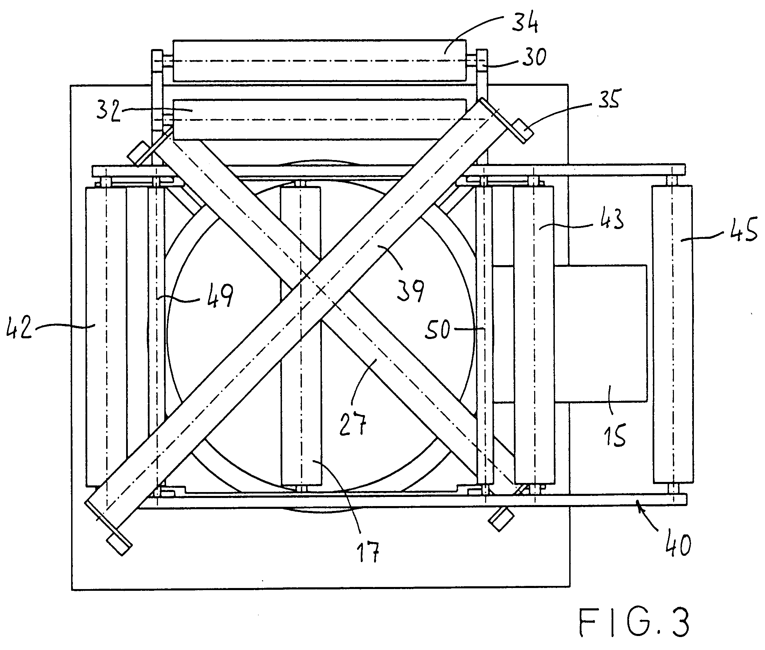

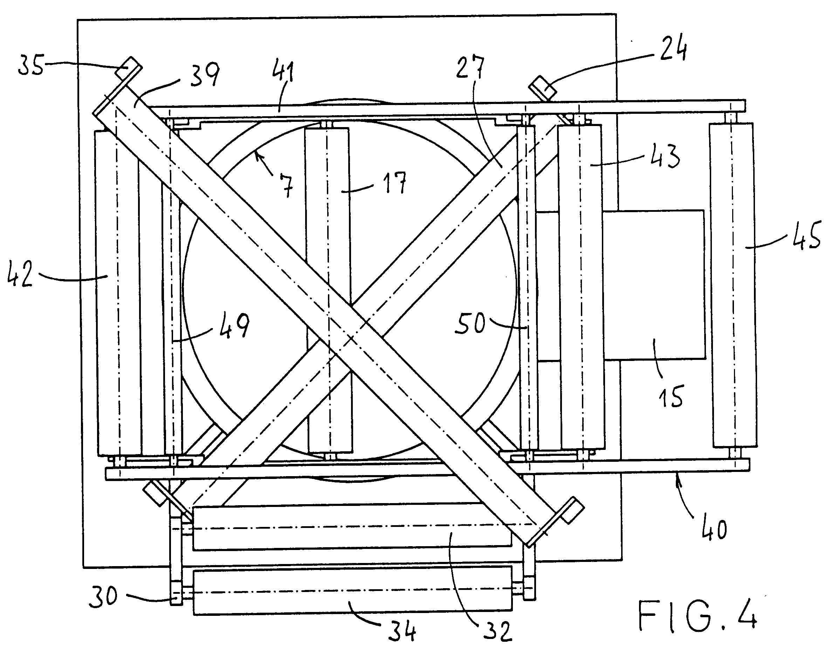

Der Verlauf der Flachfolie 1 durch die Abzugsvorrichtung 4 entspricht bei dem Ausführungsbeispiel nach Fig. 7 exakt dem Verlauf gemäß dem Ausführungsbeispiel nach den Fig. 1 bis 6, während das Einzelförderband 46a um seine Umlenkglieder 34a, 31, 29 und 27 unter Einfassung der ersten Umlenkwalze 23 und das Einzeltransportband 46b um seine Umlenkglieder 34, 31a, 38 und 39 unter Einfassung der weiteren Wendestange 42 umläuft. Es versteht sich, daß im übrigen das Ausführungsbeispiel gemäß Fig. 7 dem zuvor beschriebenen entspricht, wie es durch die Verwendung gleicher Bezugszeichen für gleiche bzw. entsprechende Teile zum Ausdruck gebracht ist.

Da die Wendestangen 27 und 38, wie die Wendestangen 29 und 39, nicht die Schlauchbahn 1 umzulenken und daher nicht deren jeweilige Beschaffenheit für eine ordnungsgemäße Führung mit wechselnden horizontalen Anlauf- und Ablaufwinkeln beim Umlenkprozeß zu berücksichtigen haben, sondern lediglich das in seinen Materialeigenschaften bekannte, entsprechend gewählte Förderband beim Umlenkvorgang abstützend führen müssen, besteht eine größere konstruktive Freiheit in der Ausbildung der drehfest montierten Wendestangen. Diese können daher von einfachen Stangen mit Rundquerschnitt aus einem geeigneten Kunststoff oder Metall bestehen oder von sog. an sich bekannten Luftwendestangen gebildet sein. Auch können andere mechanische Wendestangen eingesetzt werden, zum Beispiel Axialrollenwalzen mit am Walzenmantel angeordneten, in axialer Richtung der Walze abrollenden Röllchen oder Rohrkörper mit radial angebrachten Kugelrollen, die dem Transportband 46 axiale und radiale Bewegungen vermitteln.

Sämtliche Wendestangen 29, 27, 38, 39 weisen im übrigen eine mit einem Abstand A von der vertikalen Drehachse 21 der Abzugsvorrichtung 4 bzw. des Drehkranzpakets 7 verlaufende Grundstellung auf, wie sie insbesondere aus Fig. 1 ersichtlich ist. Dieser Abstand A entspricht dem Radius eines von dem Schwenkweg der Achsen der Wendestangen 29, 27, 38, 39 im Reversierbetrieb umschriebenen Kreises um die Drehachse 21 und errechnet sich nach der Formel Wendestangendurchmesser x π/4. Es versteht sich im übrigen, daß die Wendestangen 29, 27, 38, 39 sämtlich lang genug sein müssen, um die Schlauchbahn 1 aufnehmen zu können, wobei ihre maximale Schrägstellung von bei dem dargestellten bevorzugten Beispiel 45° auch die Anordnung der Umlenkwalzen 23, 32, 42 bestimmt, wie dies dem Fachmann grundsätzlich geläufig ist.

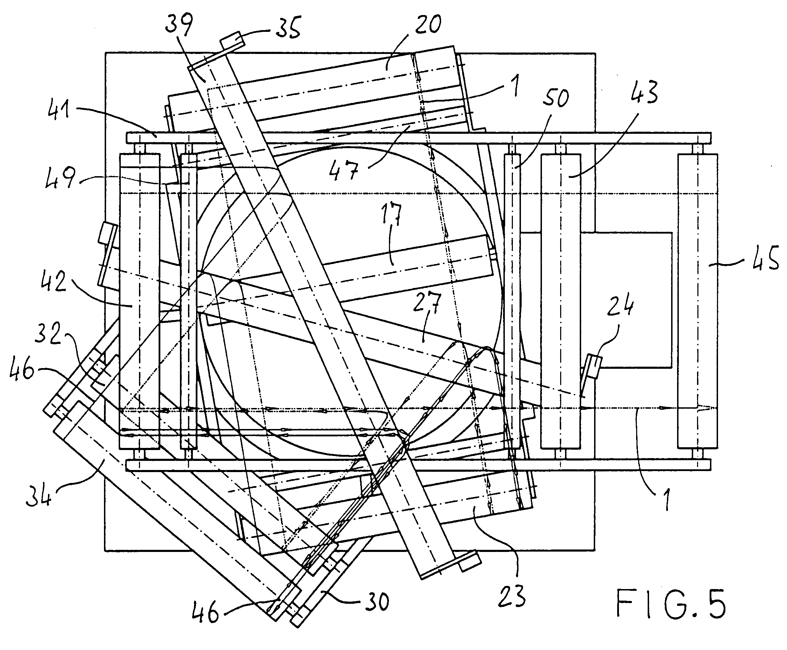

Im Betrieb wird die zwischen den Abquetschwalzen 3 flachgelegte Schlauchbahn 1 reversierend unter Einbeziehung des Transportbandes 46 durch die Abzugsvorrichtung 4 hindurchgeführt, wobei die Führung der Schlauchbahn 1 und des Transportbandes 46 in Fig. 1 und 7 für die Mittelstellung bzw. +/- 0°-Stellung des Reversiersystems und in Fig. 5 für eine Zwischenstellung, bei der die Flachlegevorrichtung 2 mit den Abquetschwalzen 3 einen Schwenkwinkel von + 100° durchlaufen hat, mit einer punktierten Linie für die Schlauchbahn 1 und mit einer voll ausgezogenen Linie für das Transportband 46 veranschaulicht ist. Ersichtlich werden die Schlauchbahn 1 und das Transportband 46 zwischen den Umlenkwalzen 23, 32, 42 und den Wendestangen 29, 27, 38, 39 abwechselnd nach außen und innen, zur Drehachse 21 des Reversiersystems hin, unter Umlenkung der Schlauchbahn 1 und des Transportbandes 46 von einer horizontalen Ebene zur nächsten geführt, mit dem Ergebnis der gleichmäßigen Verteilung der Dickentoleranzen der Kunststoffolie nach dem an sich bekannten Reversiersystem.

## Patentansprüche

1. Fördervorrichtung für Flachbahnen (1) aus Kunststoffolie, mit einem zumindest eine erste Umlenkwalze (23) und zumindest eine erste Wendestange (27) zum Umlenken der Flachbahn (1) um jeweils 180° unter gleichzeitiger Richtungsänderung umfassenden Umlenksystem, dadurch gekennzeichnet, daß in das Umlenksystem eine Abstützungseinrichtung für die Flachbahn (1) einbezogen ist, die ein endloses, mit der Fördergeschwindigkeit der Flachbahn (1) umlaufendes Transportband (46) umfaßt, das gemeinsam mit der Flachbahn (1) die erste Wendestange (27) umschlingt, derart, daß die von dieser abgewandte Seite des Transportbandes (46) während des Umschlingungseingriffs die Flachbahn (1) trägt.

2. Vorrichtung nach Anspruch 1, dadurch gekennzeichnet, daß das Transportband (46) in einem in Förderrichtung der Flachbahn (1) vor der ersten Wendestange (27) verlaufenden Förderabschnitt mit der der ersten Wendestange (27) bei deren Umschlingung zugewandten Flachseite der Flachbahn (1) in flächige Abstützungsanlage bringbar ist.

3. Vorrichtung nach Anspruch 1 oder 2, dadurch gekennzeichnet, daß das Transportband (46) für seinen Umlauf innerhalb des Umlenksystems über je ein Paar eigener Umlenkglieder (31,29,34,39) in einer horizontalen Ebene unterhalb und einer horizontalen Ebene oberhalb der von der ersten Umlenkwalze (23) und der ersten Wendestange (27) für die Schlauchbahn (1) eingenommenen horizontalen Ebenen geführt ist.

4. Vorrichtung nach Anspruch 3, dadurch gekennzeichnet, daß die Paare der Umlenkglieder für das Transportband (46) jeweils von einer Wendestange (29,39) und einer Umlenkwalze (31,34) gebildet sind, von denen eine (34) eine Antriebswalze bildet.

5. Vorrichtung nach Anspruch 4, dadurch gekennzeichnet, daß die Wendestangen (29,39) für die ausschließliche Transportbandumlenkung in einer gemeinsamen, die erste Wendestange (27) für die Flachbahnumlenkung mitenthaltenden Vertikalebene angeordnet sind.

6. Vorrichtung nach Anspruch 4 oder 5, dadurch gekennzeichnet, daß die Umlenkwalzen (31,34) für die ausschließliche Transportbandumlenkung in einer gemeinsamen Vertikalebene angeordnet sind, die von der von der ersten Umlenkwalze (23) für die Flachbahn (1) eingenommenen Vertikalebene nach außen versetzt ist.

7. Vorrichtung nach einem der Ansprüche 1 bis 6, dadurch gekennzeichnet, daß der ersten Umlenkwalze (23) für die Flachbahn (1) eine Ablenkwalze (48) in Förderrichtung für eine Zusammenführung von Flachbahn (1) und Transportband (46) bei der Umschlingung der ersten Umlenkwalze (23) im Anfangsbereich des Umlenksystems vorgeschaltet und einer letzten Umlenkwalze (42) für die Flachbahn (1) eine weitere Ablenkwalze (49) in Förderrichtung für eine Trennung von Flachbahn (1) und Transportband (46) im Endbereich des Umlenksystems nachgeschaltet ist.

8. Vorrichtung nach einem der Ansprüche 1 bis 6, dadurch gekennzeichnet, daß der oder jeder Umlenkwalze (23,32,42) für die Flachbahn (1) in Förderrichtung aufeinanderfolgende Ablenkwalzen (32a) zugeordnet sind, die dem Transportband (46) einen mit Abstand um die von der Flachbahn (1) umschlungene Umlenkwalze (23,32,42) herumführenden Weg vorgeben.

9. Vorrichtung nach einem der Ansprüche 1 bis 8, dadurch gekennzeichnet, daß das Umlenksystem zum Umlenken der Flachbahn (1) eine oder mehrere weitere Umlenkwalzen (32,42) und eine oder mehrere weitere Wendestangen (38) umfaßt, die in der gleichen Vertikalebene wie die erste Umlenkwalze (23) bzw. die erste Wendestange (27) innerhalb des unten und oben in der Horizontalen vom Transportband (46) begrenzten Raumes angeordnet sind.

10. Vorrichtung nach Anspruch 9, dadurch gekennzeichnet, daß das Transportband (46) in zwei Einzeltransportbänder (46a,46b) unterteilt ist, die in spiegelsymmetrischer Anordnung beidseits einer die Drehachse der weiteren, der ersten Umlenkwalze (23) nächstgelegenen Umlenkwalze (32) enthaltenden horizontalen Ebene übereinander im Umlenksystem gehalten sind.

11. Vorrichtung nach Anspruch 10, dadurch gekennzeichnet, daß der vertikale Abstand zwischen dem unteren und dem oberen Einzeltransportband (46a,46b) dem Durchmesser der weiteren Umlenkwalze (32) entspricht.

12. Vorrichtung nach Anspruch 10 oder 11, dadurch gekennzeichnet, daß die Einzeltransportbänder (46a,46b) für ihren eigenständigen Umlauf jeweils eine zusätzliche eigene Umlenkwalze (34a,31a) in einer die erste Wendestange (27) bzw. die weitere Wendestange (38) enthaltenden horizontalen Ebene aufweisen.

13. Vorrichtung nach einem der Ansprüche 10 bis 12,dadurch gekennzeichnet, daß jedes der Einzeltransportbänder (46a,46b) gesondert über eine (34,34a) seiner Umlenkwalzen (31,34a;31a,34) antreibbar ist.

14. Vorrichtung nach einem der Ansprüche 1 bis 13, dadurch gekennzeichnet, daß sie Teil einer Abzugsvorrichtung (4) für von einem Extruder mit ortsfest angeordnetem Blaskopf hergestellte Schlauchbahnen (1) aus Kunststoffolie bildet und im Anschluß an eine Flachlegevorichtung (2) für die mit aufgeweitetem Rundquerschnitt zugeführte Schlauchbahn (1) angeordnet ist, um die flachgelegte Schlauchbahn (1) als Flachbahn zu einer ihrerseits ortsfesten Wickelvorrichtung zu transportieren, und das Umlenksystem als zwischen der Flachlegevorrichtung (2) und der ortsfesten Wickelvorrichtung angeordnetes Reversiersystem ausgebildet ist, das in einem Vorrichtungsgestell (5) schwenkbar abgestützt ist.

15. Vorrichtung nach einem der Ansprüche 1 bis 14, dadurch gekennzeichnet, daß die das Transportband (46;46a,46b) umfassende Abstützungseinrichtung zu ihrer Einbeziehung in das Reversiersystem ebenso wie die Umlenkwalze oder -walzen (23,32,42) und die Wendestange oder -stangen (27,38) für die flachgelegte Schlauchbahn (1) zur Ausführung reversierender Schwenkbewegungen in einer horizontalen Ebene um die Vertikalachse der zugeführten Schlauchbahn (1) drehbar im Vorrichtungsgestell (5) abgestützt ist.

16. Vorrichtung nach Anspruch 15 in Verbindung mit Anspruch 3 oder einem der von diesem abhängigen Ansprüche, dadurch gekennzeichnet, daß die Umlenkglieder (31,29,34,39) für das Transportband (46;46a,46b) sowie die Umlenkwalze oder -walzen (23,32,42) und die Wendestange oder -stangen (27,38) für die Schlauchbahn (1) an gesonderten Drehgliedern des Vorrichtungsgestells (5) zur Ausführung unterschiedlich großer Schwenkwinkel während ihrer reversierenden Schwenkbewegungen abgestützt sind.

17. Vorrichtung nach einem der Ansprüche 3 bis 16, dadurch gekennzeichnet, daß die Umlenkglieder (31,34,29,39) für das Transportband (46;46a,46b) an verschiedenen Haltern (24,30,35) gehalten sind, an denen zugleich auch Umlenkglieder (27,32,38) des Reversiersystems für die Schlauchbahn (1) gehalten sind, und daß die verschiedenen Halter (24,30,35) jeweils für eine Ausführung unterschiedlicher Schwenkwinkel im Reversiersystem drehbar im Vorrichtungsgestell (5) abgestützt sind.

18. Vorrichtung nach einem der Ansprüche 1 bis 17, dadurch gekennzeichnet, daß das Reversiersystem zum Umlenken der Schlauchbahn (1) zumindest eine der ersten Umlenkwalze (23) in 0°-Stellung des Systems diametral gegenüberliegende Umlenkwalze (19,20) zur Wegverlängerung der Schlauchbahn (1) beim Einlauf in das Reversiersystem aufweist.

19. Vorrichtung nach Anspruch 18, dadurch gekennzeichnet, daß die wegverlängernde Umlenkwalze (19,20) im gleichen horizontalen Abstand von der vertikalen Drehachse (21) des Reversiersystems wie die erste Umlenkwalze (23) angeordnet ist.

20. Vorrichtung nach Anspruch 19, dadurch gekennzeichnet, daß der wegverlängernden Umlenkwalze (19) eine im Bereich zwischen der vertikalen Drehachse (21) des Reversiersystems und der wegverlängernden Umlenkwalze (19) angeordnete Führungswalze (17) vorgeschaltet ist.
